**Europäisches Patentamt**

**European Patent Office**

**Office européen des brevets**

(11) Numéro de publication : **0 474 537 A1**

(19)

(12) # DEMANDE DE BREVET EUROPEEN

(21) Numéro de dépôt : **91402301.5**

(51) Int. Cl.⁵ : **B62B 7/08,** B62B 7/14

(22) Date de dépôt : **23.08.91**

(30) Priorité : **31.08.90 FR 9010875**

(43) Date de publication de la demande :
**11.03.92 Bulletin 92/11**

(84) Etats contractants désignés :
**BE DE ES GB IT LU NL SE**

(71) Demandeur : **BABY RELAX Société en nom
collectif
2, rue Balzac
F-75008 Paris (FR)**

(72) Inventeur : **Garacotche, André
64250 Cambo Les Bains (FR)**

(74) Mandataire : **Orès, Bernard et al
Cabinet ORES 6, Avenue de Messine
F-75008 Paris (FR)**

(54) **Perfectionnements aux poussettes pliantes pour enfants.**

(57)    Poussette pliante pour enfant, comportant un châssis roulant susceptible d'être replié et déployé pour servir de support à une nacelle ou hamac monté sur le châssis à inclinaison réglable et de manière réversible, le châssis comprenant deux ensembles latéraux dont chacun est constitué par une jambe avant (11) et une jambe arrière (12) ainsi que par un bras (10) dirigé sensiblement parallèlement à la jambe avant et propre à coulisser par rapport à cette dernière par l'intermédiaire d'un manchon (13) qui porte une partie des moyens (M) de montage du hamac (H) sur le châssis (C), la jambe arrière étant munie à son extrémité inférieure d'une chape (18) sur laquelle est articulée une bielle (19) également articulée autour d'un axe (20) solidaire du manchon.

La chape (18) que porte la jambe arrière (12) est montée coulissante sur ladite jambe entre une butée basse (21) et une butée haute (22) en étant constamment sollicitée par un ressort de rappel (23).

EP 0 474 537 A1

FIG.1

L'invention est relative aux poussettes pliantes pour enfants.

On connaît déjà, dans de nombreuses réalisations, des poussettes pliantes pour enfants généralement constituées par un châssis roulant, repliable, destiné au support d'une nacelle ou hamac monté sur le châssis à inclinaison réglable, d'une part, et de manière réversible, d'autre part, c'est-à-dire pour permettre de placer l'enfant dans la nacelle soit dans le sens d'avancement de la poussette, soit dans le sens inverse. Si les réalisations connues donnent satisfaction, il est cependant apparu que des perfectionnements pouvaient encore y être apportés, aussi bien en ce qui concerne le confort des enfants transportés que la facilité et la sûreté d'utilisation.

C'est, par conséquent, un but général de l'invention de fournir de tels perfectionnements applicables, notamment, aux poussettes pour enfants du type "pliables à plat" (c'est-à-dire ayant la forme générale d'un parallélépipède de faible épaisseur dans leur condition repliée) même s'ils trouvent application aux poussettes que l'on peut replier plus complètement et qui sont communément désignées sous le nom de "poussettes-cannes".

L'invention s'applique ainsi préférentiellement, mais non exclusivement, à une poussette comportant un châssis roulant susceptible d'être replié et déployé pour servir de support à une nacelle ou hamac monté sur le châssis à inclinaison réglable et de manière réversible, le châssis comprenant deux ensembles latéraux dont chacun est constitué par une jambe avant et une jambe arrière ainsi que par un bras dirigé sensiblement parallèlement à la jambe avant et propre à coulisser par rapport à cette dernière par l'intermédiaire d'un manchon qui porte une partie des moyens de montage du hamac sur le châssis, la jambe avant étant fixée à son extrémité supérieure sur un bloc traversé à coulissement par ledit bras et qui porte aussi l'axe d'articulation supérieur de la jambe arrière laquelle est munie à son extrémité inférieure d'une chape sur laquelle est articulée une extrémité d'une bielle dont l'autre extrémité est articulée autour d'un axe solidaire du manchon.

Dans une telle poussette l'invention prévoit, selon une première caractéristique, que la chape que porte la jambe arrière soit montée coulissante sur ladite jambe, entre une butée haute et une butée basse et en étant constamment sollicitée par un ressort de rappel.

On accroît ainsi la souplesse d'ensemble de la poussette et, par suite, le confort de l'enfant qu'elle transporte.

Selon une autre caractéristique de l'invention, on prévoit d'assurer la sécurité à l'encontre d'un pivotement intempestif du hamac par rapport au châssis en associant aux moyens de montage à inclinaison réglable du hamac sur le châssis un organe actionnable à la main, mobile à translation contre l'action d'un ressort de rappel et qui limite l'envergure angulaire d'inclinaison du hamac par rapport audit châssis aussi longtemps qu'il n'est pas actionné.

Dans une réalisation avantageuse, l'organe actionnable à la main est logé dans une première pièce solidaire du chassis et est opératoire par des faces de butée propres à coopérer avec une seconde pièce solidaire en rotation du hamac.

Dans une forme de réalisation préférée, l'organe mobile à translation est à section droite quelque peu en forme de secteur circulaire, la pièce solidaire du châssis est une première demi-coquille fixée au manchon et la pièce solidaire du hamac est une seconde demi-coquille montée à rotation par rapport à la première.

L'invention sera bien comprise par la description qui suit, faite à titre d'exemple et en référence au dessin annexé dans lequel :

– la figure 1 est une vue de côté d'une poussette selon l'invention dans sa condition déployée ;

– la figure 2 est une vue correspondante, mais à plus petite échelle, dans la condition repliée de la poussette ;

– la figure 3 est une vue partielle illustrant schématiquement différents modes d'utilisation possibles de la poussette ;

– la figure 4 est une vue schématique, éclatée, illustrant les moyens de montage d'un hamac sur le châssis ;

– les figures 5A, 5B, 5C, 5D et 5E illustrent une des parties constitutives des moyens de montage du hamac sur le châssis et un détail de ladite partie ;

– les figures 6A et 6B sont des vues partielles d'une autre partie des moyens de montage ;

– les figures 7A, 7B, 7C, 7D et 7E sont des vues de l'organe de verrouillage des moyens de montage.

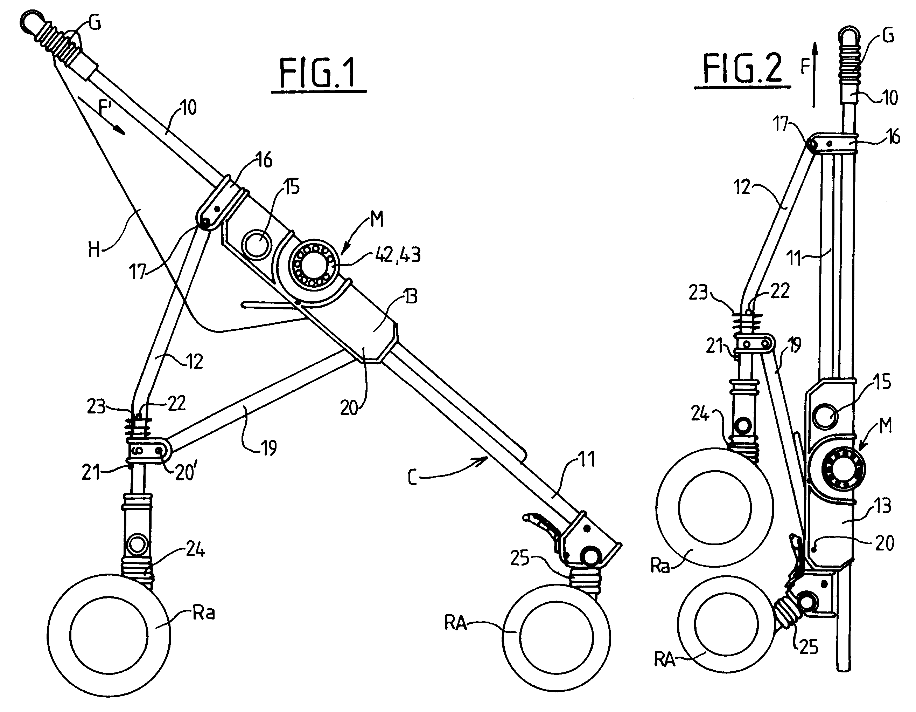

On se réfère d'abord aux figures 1 à 3 qui illustrent l'organisation générale d'une poussette du type "pliante à plat" et à laquelle s'applique particulièrement à l'invention. Une telle poussette pour enfant comprend essentiellement un châssis roulant C destiné au support, à l'aide de moyens M, d'une nacelle ou hamac H servant de siège pour l'enfant à transporter et qui est d'inclinaison réglable d'une part, mais aussi réversible, d'autre part, pour permettre de promener l'enfant soit dans le sens d'avancement de la poussette, soit dans le sens inverse. Le châssis roulant C comporte deux ensembles latéraux, de préférence symétriques par rapport à un plan longitudinal moyen et dont chacun est essentiellement constitué par :

. une jambe avant 11 en tube métallique ou en matière plastique portant à son extrémité avant et avec interposition d'une suspens ion télescopique usuel le 25, une roue avant RA ;

. une jambe arrière 12, légèrement coudée, portant à son extrémité inférieure et par l'intermédiaire d'une suspension télescopique usuelle 24 une roue arrière Ra ;

. un bras 10 dirigé sensiblement parallèlement à la jambe avant 11 et propre à coulisser par rapport à cette dernière par l'intermédiaire d'un manchon 13 qui porte une partie des moyens M de montage du hamac H sur le châssis ;

. un bloc 16 fixé à l'extrémité supérieure de la jambe avant 11, traversé à coulissement par le bras 10 et qui porte l'axe 17 d'articulation supérieur de la jambe arrière 12 ;

. une bielle 19 articulée à une de ses extrémités autour d'un axe 20 porté par le manchon 13 et à son autre extrémité autour d'un axe 20' porté par une chape 18 laquelle, selon l'invention, est montée coulissante sur la jambe 12, entre une butée basse 21 et une butée haute 22 en étant constamment sollicitée par un ressort de rappel 23.

De façon en soi connue, les bras 10 de chacun des deux ensembles de châssis sont réunis par un guidon G et la poussette est soit déployée à partir de la condition montrée sur la figure 2 en tirant le guidon dans le sens de la flèche F pour écarter les bras 10 des jambes 11 (l'immobilisation dans cette position de chaque bras 10 par rapport à la jambe 11 qui lui est associée étant obtenue à l'aide d'un mécanisme à bouton poussoir 15 et ressort 15' prévu sur le manchon 13), soit repliée à partir de la condition montrée sur la figure 1, en repoussant le guidon G dans le sens de la flèche F', le maintien en position repliée étant assuré par l'un des boutons 15.

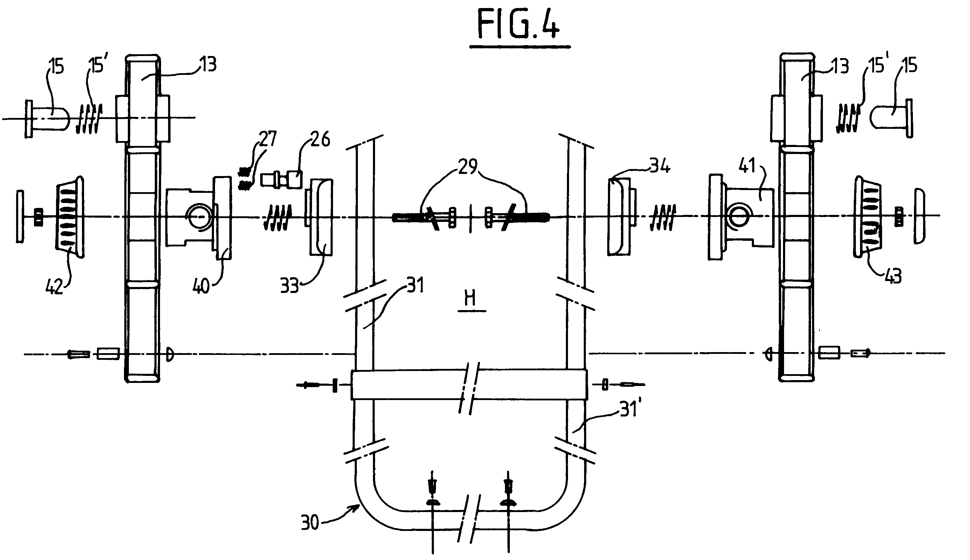

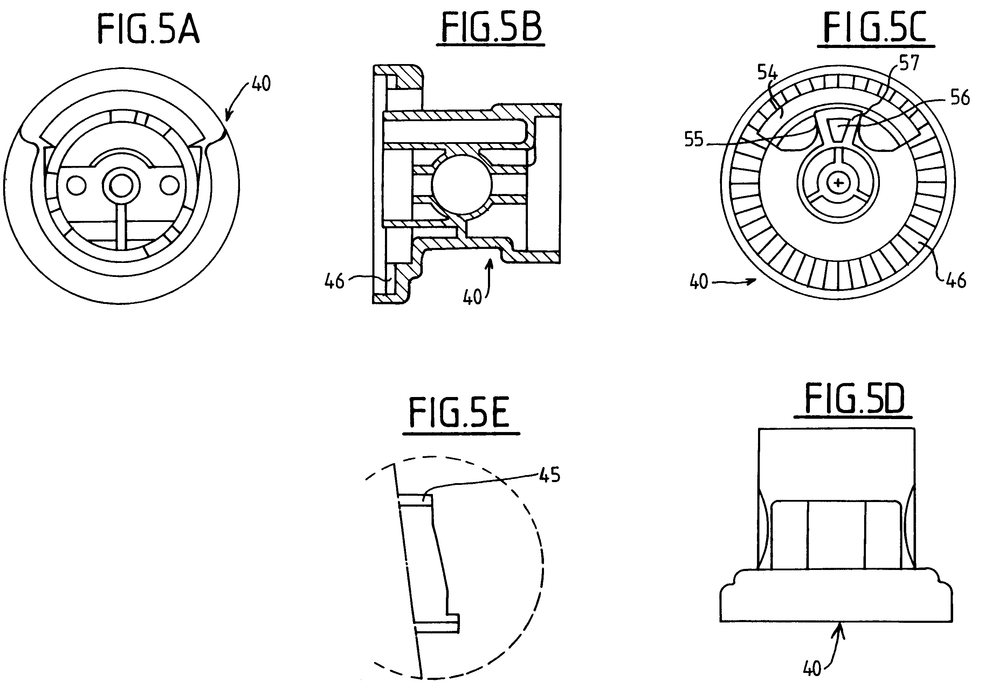

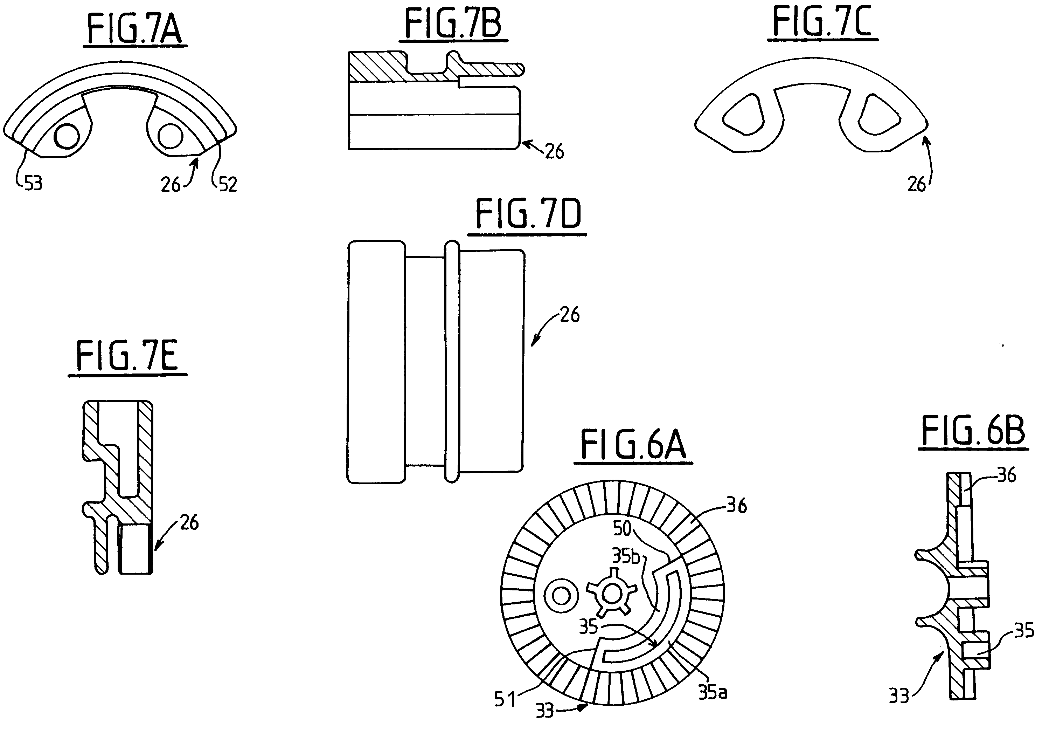

On se réfère maintenant aux figures 4 à 7 qui illustrent les moyens M de montage de la nacelle ou hamac H sur le châssis roulant C. Comme montré sur la figure 4 (qui est une vue schématique éclatée) le hamac en toile, ou matériau analogue, est solidaire d'un cadre de hamac 30 conformé suivant un U à branches 31 et 31' sur chacune desquelles sont fixées des demi-coquilles 33 et 34, respectivement. Comme bien visible sur les figures 6A et 6B, chaque demi-coquille 33, 34 comprend sur sa face frontale une partie en saillie 35 ménagée par deux nervures en arc de cercle 35a et 35b réunies à leurs extrémités par des faces radiales 50 et 51 ; chaque demi-coquille 33, 34 comprend également sur sa face frontale une denture 36 propre à engrener avec une denture correspondante 46 ménagée sur chaque face frontale de deux autres demi-coquilles 40 et 41 solidaires, respectivement, des manchons 13 de chaque ensemble latéral de châssis. Comme montré sur les figures 5A à 5D et sur la vue de détail 5E, chaque demi-coquille 40, 41 est mobile en rotation et en translation par rapport à la demi-coquille 33, 34 à laquelle elle est associée, le mouvement de rotation (autour d'un axe matérialisé par un système vis-écrou 29) et de translation étant commandé par l'actionnement en rotation d'un bouton 42 ou 43, respectivement, prévu sur la face externe des manchons 13 et qui engendre le mouvement de translation grâce à une came 45, figure 5E, ménagée dans chaque demi-coquille 40, 41. A ce mouvement correspond le rapprochement des demi-coquilles 40, 41 par rapport aux demi-coquilles 33, 34, et cela jusqu'à ce que viennent en prise les dents 46 des premières avec les dents 36 des secondes, assurant ainsi le blocage en rotation du cadre 30 du hamac H par rapport aux manchons 13 et donc au châssis C.

Conformément à l'invention, également, l'inclinaison réglable du hamac H est limitée en envergure aussi longtemps que n'est pas actionné manuellement un organe de sécurité 26 (figures 7A à 7E) tandis qu'est autorisée une inclinaison du hamac sur une plus grande envergure angulaire après qu'ait été actionné ledit organe de sécurité.

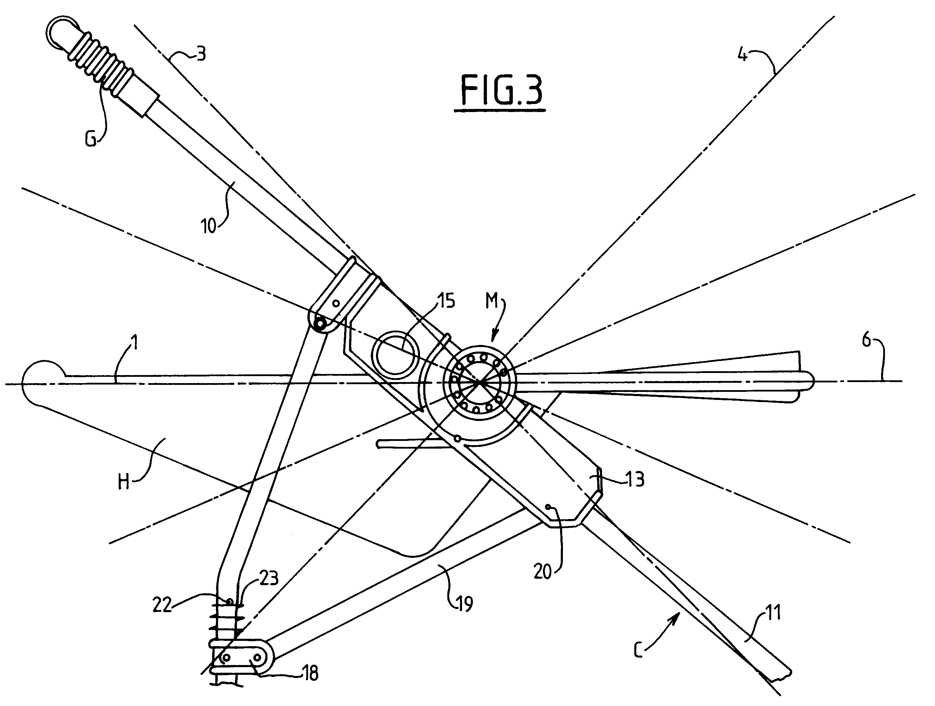

De façon plus précise, aussi longtemps que l'organe 26, -à section droite quelque peu en forme de secteur circulaire et qui est monté à translation dans un logement 54 de la demi-coquille 40 contre l'action de deux ressorts 27-, n'est par manoeuvré, la rotation du cadre 30 est limitée par butée des faces 50 et 51 (figure 6A) de la saillie 35 de la demi-coquille 33 contre les faces 52 et 53 (figure 7A) dudit organe 26 et pour cette première condition de l'organe de sécurité, les limites du débattement angulaire du hamac H par rapport au châssis sont montrées, sur la figure 3, par les lignes en tirets 3 et 4.

Lorsque l'organe de sécurité 26 est déplacé manuellement en translation contre l'action des deux ressorts 27 le débattement angulaire possible du hamac H par rapport au châssis C devient alors celui montré sur la figure 3 entre les lignes en tirets 1 et 6, la rotation du hamac étant alors limitée, dans ce cas, par le contact de butée des faces 50 et 51 de la saillie 35 avec les faces 55 et 56 d'un arrêtoir 57 de la demi-coquille 40.

On satisfait ainsi, par les moyens de l'invention, aux conditions de sécurité exigées par les normes ou législations en vigueur en matière de poussettes d'enfants, et qui veulent que le débattement angulaire d'inclinaison du hamac par rapport au châssis soit limité aussi longtemps que n'est pas actionné un organe de sécurité tout en permettant, dans le cas contraire, une inclinaison simple et sûre, facile à régler et à fixer mais dans un domaine angulaire de plus faible envergure.

## Revendications

1. Poussette pliante pour enfant, comportant un châssis roulant susceptible d'être replié et déployé pour servir de support à une nacelle ou hamac monté sur le châssis à inclinaison réglable et de manière réversible, le châssis comprenant deux ensembles latéraux dont chacun est constitué par une jambe avant (11) et une jambe arrière (12) ainsi que par un bras (10) dirigé sensiblement parallèlement à la jambe avant et propre à coulisser par rapport à cette dernière par l'intermédiaire d'un manchon (13) qui porte une partie des moyens (M) de montage du hamac (H) sur le châssis (C), la jambe avant (11) étant fixée à son extrémité supérieure sur un bloc (16) traversé à coulissement par ledit bras et qui porte aussi l'axe d'articulation supérieur (17) de la jambe arrière, laquelle est munie à son extrémité inférieure d'une chape (18) sur laquelle est articulée une extrémité d'une bielle (19) dont l'autre extrémité est articulée autour d'un axe (20) solidaire du manchon, caractérisée en ce que la chape (18) que porte la jambe arrière (12) est montée coulissante sur ladite jambe entre une butée basse (21) et une butée haute (22) en étant constamment sollicitée par un ressort de rappel (23).

2. Poussette pliante pour enfant comportant un châssis roulant susceptible d'être replié et déployé pour servir de support à une nacelle ou hamac monté sur le châssis à inclinaison réglable et de manière réversible, le châssis comprenant deux ensembles latéraux dont chacun est constitué par une jambe avant (11) et une jambe arrière (12) ainsi que par un bras (10) dirigé sensiblement parallèlement à la jambe avant et propre à coulisser par rapport à cette dernière par l'intermédiaire d'un manchon (13) qui porte une partie des moyens (M) de montage du hamac (H) sur le châssis (C) la jambe avant (11) étant fixée à son extrémité supérieure sur un bloc (16) traversé à coulissement par ledit bras et qui porte aussi l'axe d'articulation supérieur (17) de la jambe arrière, laquelle est munie à son extrémité inférieure d'une chape (18) sur laquelle est articulée une extrémité d'une bielle (19) dont l'autre extrémité est articulé autour d'un axe (20) solidaire du manchon, caractérisée en ce qu'aux moyens (M) de montage à inclinaison réglable du hamac (H) sur le châssis (C) est associé un organe (26) actionnable à la main, mobile en translation contre l'action d'un ressort de rappel (27) et qui limite l'envergure angulaire d'inclinaison du hamac (H) par rapport audit châssis aussi longtemps qu'il n'est pas actionné.

3. Poussette selon la revendication 2, caractérisée en ce que l'organe actionnable à la main (26) est logé dans une première pièce (40) solidaire du châssis (C) et est opératoire par des faces de butée (52, 53) propres à coopérer avec une seconde pièce (33) solidaire en rotation du hamac (H).

4. Poussette selon la Revendication 2 ou la revendication 3, caractérisée en ce que l'organe mobile à translation (26) est à section droite quelque peu en forme de secteur circulaire, la pièce solidaire du châssis étant une première demi-coquille (40) fixée au manchon (13) et la pièce solidaire du hamac étant une seconde demi-coquille (33) montée à rotation par rapport à la première et qui ménage une saillie (35).

5. Poussette selon l'une quelconque des Revendications 2 à 4, caractérisée en ce que les moyens (M) de montage à inclinaison réglable du hamac (H) sur le châssis (C) comprennent aussi un arrêtoir (57) solidaire de la première demi-coquille et avec lequel sont propres à coopérer les faces radiales d'extrémités (50, 51) de la saillie (35) ménagée sur la seconde demi-coquille (33).

FIG.1

FIG.2

FIG.3

FIG.4

## FIG.5A

40

## FIG.5B

46

40

## FIG.5C

54    57

56

55

40    46

## FIG.5E

45

## FIG.5D

40

EP 0 474 537 A1

FIG.7C

FIG.7B

FIG.7A

FIG.7D

FIG.7E

FIG.6A

FIG.6B

Office européen
des brevets

**RAPPORT DE RECHERCHE EUROPEENNE**

Numero de la demande

EP 91 40 2301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2 318 773 (PEREGO-PINES S.P.A.) <br> * page 4, ligne 1 - page 5, ligne 3; figures * <br> --- | 1 | B62B7/08 <br> B62B7/14 |
| Y | FR-A-2 349 485 (PEREGO-PINES S.P.A.) <br> * page 4, ligne 9 - page 4, ligne 15; figures * <br> --- | 1 | |
| A | NL-A-8 400 250 (H. R. T. TEN HAVE) <br> * figures * <br> --- | 1 | |
| A | EP-A-0 339 890 (HESTAIR MACLAREN LTD.) <br> * colonne 3, ligne 6 - colonne 7, ligne 7; figures * <br> ----- | 1-5 | |

DOMAINES TECHNIQUES
RECHERCHES (Int. Cl.5 )

B62B

Le présent rapport a été établi pour toutes les revendications

| Lieu de la recherche | Date d'achèvement de la recherche | Examinateur |
|---|---|---|
| LA HAYE | 09 DECEMBRE 1991 | FRANKS B.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)